# EUROPÄISCHE PATENTSCHRIFT

(11) **EP 3 254 870 B1**
(45) Veröffentlichungstag und Bekanntmachung des Hinweises auf die Patenterteilung: **04.03.2020**
(21) Anmeldenummer: 16173675.6
(22) Anmeldetag: 09.06.2016
(51) Int. Cl.: B60C 9/00, B60C 9/18, B60C 15/06, B60C 9/20, D02G 3/48

(54) **VERSTÄRKUNGSLAGE FÜR GEGENSTÄNDE AUS ELASTOMEREM MATERIAL, VORZUGSWEISE FÜR FAHRZEUGLUFTREIFEN UND FAHRZEUGLUFTREIFEN ALS SOLCHER**
REINFORCING PLY FOR OBJECTS MADE OF ELASTOMER MATERIAL, PREFERABLY FOR PNEUMATIC VEHICLE TIRES AND PNEUMATIC VEHICLE TIRES AS SAME
POSITION DE RENFORCEMENT POUR OBJETS COMPOSES DE MATERIAU ELASTOMERE, DE PREFERENCE POUR PNEUS DE VEHICULE ET PNEUS DE VEHICULE EN TANT QUE TELS

(43) Veröffentlichungstag der Anmeldung: 13.12.2017
(73) Patentinhaber: Continental Reifen Deutschland GmbH, 30165 Hannover (DE)
(72) Erfinder: Reese, Wolfgang, 31228 Peine (DE); Kramer, Thomas, 32049 Herford (DE)
(74) Vertreter: Finger, Karsten

(56) Entgegenhaltungen:
- EP-A1- 2 781 367
- WO-A1-2015/137901

## Beschreibung

Die Erfindung betrifft eine gummierte Verstärkungslage für Gegenstände aus elastomerem Material, vorzugsweise für Fahrzeugreifen, wobei die Verstärkungslage eine Vielzahl an parallelen und beabstandet zueinander angeordneten Festigkeitsträgern aufweist, wobei jeder Festigkeitsträger ein Cord ist, welcher aus wenigstens zwei verdrehten Multifilamentgarnen endverdreht ist. Die Erfindung betrifft ferner einen Fahrzeugluftreifen, enthaltend diese Verstärkungslage.

Verstärkungslagen für Gegenstände aus elastomerem Material wie beispielsweise technische Gummiprodukte und Fahrzeug(luft)reifen haben größte Bedeutung und sind dem Fachmann im Allgemeinen bekannt. Die Verstärkungslagen weisen eine Vielzahl an verstärkenden, fadenförmigen Elementen, den sogenannten Festigkeitsträgern, auf. Diese sind vollständig in elastomeres Material eingebettet. Die Festigkeitsträger dieser Verstärkungslagen weisen beispielsweise die Form von Geweben oder kalandrierten, endlos gespulten Festigkeitsträgern auf.

Aus der WO 2015/137901 A1 ist ein Fahrzeugluftreifen mit einem Gürtel und einer Gürtelbandage bekannt, wobei die Festigkeitsträger der Gürtelbandage Hybridcorde aus PET-Multifilamentgarnen und Nylon 6.6-Multifilamentgarnen sind. Diese Hybridcorde weisen einen erhöhten Heißschrumpf und Modulus durch bestimmte Behandlungsschritte auf.
Aus der EP 2 781 367 A1 ist eine gummierte Verstärkungslage für Gegenstände aus elastomerem Material bekannt, wobei die Verstärkungslage Hybridcorde aus wenigstens zwei verdrehten Multifilamentgarnen aufweist. Die Hybridcorde bestehen aus einem Viskose-Multifilamentgarn und einem nicht-metallischen Multifilamentgarn, welches nicht aus dem Material Viskose besteht. Das Viskose-Multifilamentgarn wird einer Konditionierung unterzogen, um danach einen Garntiter < 1100 dtex und eine Bruchfestigkeit ≥ 45 cN/tex aufweist und der Hybridcord einen Kordtiter ≤ 3000 dtex aufweist.

Bei Fahrzeugluftreifen werden Corde als Festigkeitsträger beispielsweise im Wulstbereich, als Karkassmaterial, für Gürtellagen und in der Gürtelbandage eingesetzt.

Ein Cord besteht im Rahmen dieser Anmeldung aus wenigstens 2 miteinander verdrehten Multifilamentgarnen.

Die Gürtelbandage dient bei Fahrzeugluftreifen und insbesondere beim Hochgeschwindigkeitseinsatz dazu, eine Erhebung des Reifens durch die im Fahrbetrieb auftretenden Fliehkräfte zu verhindern. Sie ist bei einem Fahrzeugluftreifen, welcher im Allgemeinen eine luftundurchlässige Innenschicht, eine Festigkeitsträger enthaltende Radialkarkasse, die vom Zenitbereich des Reifens über die Seitenwände bis in den Wulstbereich reicht und dort meist durch Umschlingen zugfester Wulstkerne verankert ist, einen radial außen befindlichen, Profilrillen aufweisenden Laufstreifen und einen Gürtel, zwischen Gürtel und Laufstreifen angeordnet. Die Gürtelbandage kann ein- oder mehrlagig ausgebildet sein, deckt zumindest die Gürtelränder ab und enthält parallel und im Wesentlichen in Umfangsrichtung verlaufende Festigkeitsträger in Form von Corden, die in eine Kautschukmischung eingebettet sind. Die Gürtelbandage wird bei der Reifenherstellung in Form von Lagen, Streifen oder Einzelfestigkeitsträgern mit in eine unvulkanisierte Kautschukmischung eingebetteten Festigkeitsträgern aufgebracht, die auf den Gürtel gewickelt oder gespult werden. Die Festigkeitsträger werden für solche Lagen in Kautschuk eingebettet, indem beispielsweise eine Schar von im Wesentlichen parallel liegenden fadenförmigen Festigkeitsträgern, die in der Regel thermisch und/oder zur besseren Haftung am einbettenden Gummi in dem Fachmann bekannter Art mit einer Imprägnierung vorbehandelt sind, in Längsrichtung einen Kalander oder einen Extruder zur Ummantelung mit der Kautschukmischung durchlaufen. Oder aber es werden Festigkeitsträger verwendet, die klebrig imprägniert sind und ohne eine kalandrierte Haftmischung verarbeitet werden können. Bei der Bombage und der Vulkanisation des Reifens dehnt sich der Reifen in der Regel im Schulterbereich durch die Erhebung um bis zu 2 % und im Mittenbereich um bis zu 4 % im Vergleich zum unvulkanisierten Rohling, wenn dieser Rohling auf einer flachen Trommel gewickelt wird. Somit soll der Festigkeitsträger, welcher in der Gürtelbandage eingesetzt ist, vorteilhafterweise diese Erhebung erlauben, also anfangs mit geringerem Kraftaufwand gedehnt werden können, jedoch nach dieser Anfangsdehnung bis 4% für die Hochgeschwindigkeitstauglichkeit mit nur höherem Kraftaufwand gedehnt werden können. In einem Kraft-Dehnungsdiagramm soll der Festigkeitsträger demnach bis zu einer Dehnung von 4% einen flacheren Verlauf und anschließend einen steileren Verlauf aufweisen.
Die Gürtelbandage ist ein- oder mehrlagig ausgebildet, deckt die Gürtelränder ab und weist parallel und etwa in Umfangsrichtung verlaufende Festigkeitsträger in Form von in Gummi eingebetteten Corden auf. "Etwa in Umfangsrichtung" meint einen Winkel von 0° bis 5° in Bezug auf die Reifenumfangsrichtung.

Aus der WO 2014182265 A1 ist ferner ein Fahrzeugluftreifen bekannt, welcher in der Gürtelbandage Festigkeitsträger aus Polyamid 6.6 aufweist.

Aus der US 3,343,363 A sind getwistete Polyamid 6.6 -Filamente, -Garne und -Corde als Festigkeitsträger als Verstärkungsmaterial für Reifen bekannt, welche einen Anfangsmodul zwischen 25 und 60 g/d und eine feinheitsbezogene Festigkeit (Tenacity) größer als 7.0 g/d bei Raumtemperatur aufweisen. Die Werte des Anfangsmoduls sind ermittelt nach ASTM A1380-61T.

Aus der US 3,849,976 A sind Polyamid 6.6 -Corde mit zwei oder mehr Multifilamentgarnen mit einem Ls-Modul größer als 60 g/d als Verstärkungsmaterial für Reifen bekannt, welche durch Verstreckung unter hohen Spannungen bei hohen Temperaturen erhalten sind.

Aus der US 4,284,117 A sind verdrehte Nylon-, Polyester-, Rayon- und Aramidgarne als Festigkeitsträger der Gürtelbandage von Fahrzeugluftreifen bekannt.

Die US 5,115,853 A offenbart Nylon-Corde der Konstruktion 420 d x 2 (470 dtex x 2) mit einer Cordverdrehung, welche geringer als 276 t/m ist und welche in der Gürtelbandage von Fahrzeugluftreifen verwendet sind.

Aus dem Stand der Technik ist es bekannt, den Anfangsmodul oder LASE (Load At Specified Elongation) von Polyamid-Corden zu erhöhen, indem diese bei vergleichsweise hohen Temperaturen heißverstreckt werden. Um die hierdurch erhaltenen Eigenschaften auch nach der Relaxation (konditioniert mit freien geschnittenen Enden unter Laborbedingungen) zu erhalten, war es bisher notwendig, die PA 6.6 -Garne oder -Corde Temperaturbedingungen höher als 250°C auszusetzen. Nachteilig ist jedoch, dass die Corde unter den vorstehenden Bedingungen rigide/spröde werden und daher schneller bei Beanspruchung auf Druck- und Biegewechsel ermüden.

Es ist die Aufgabe der Erfindung, eine Verstärkungslage für Gegenstände aus elastomerem Material bereitzustellen, welche Festigkeitsträger aus Polyamid 6.6 mit einem ab 4% Dehnung vergleichbar hohen Modul aufweist, welche jedoch ermüdungsbeständiger in Bezug auf Druck- und Biegewechselbeanspruchung sind. Es ist ferner die Aufgabe der Erfindung, einen Fahrzeugluftreifen bereitzustellen, der eine vorgenannte Verstärkungslage aufweist und welcher verbesserte Hochgeschwindigkeitseigenschaften und einen verbesserten Rollwiderstand aufweist.

Die Aufgabe wird in Bezug auf die Verstärkungslage dadurch gelöst, dass der Cord aus wenigstens zwei verdrehten Multifilamentgarnen aus Polyamid 6.6 endverdreht ist, dass das Rohgarn aus Polyamid 6.6 eine feinheitsbezogene Festigkeit aufweist, welche bei einer Dehnung von 4% in einem Bereich von 1,35 cN/dtex bis 1,60 cN/dtex liegt, dass der Cord eine feinheitsbezogene Festigkeit aufweist, welche bei einer Dehnung von 4% in einem Bereich von 1,2 cN/dtex bis 2 cN/dtex liegt und dass der Cord einen Heißschrumpf bei 177° in einem Bereich von 4,0% - 7,0% aufweist, wobei die feinheitsbezogene Festigkeit nach ASTM D885-16 und der Heißschrumpf bei 177°C unter einer Vorspannung von 0,045 g/dtex mit zwei Minuten Expositionszeit ermittelt sind.

"Rohgarn" meint ein Multifilamentgarn, welches noch nicht heißverstreckt ist. "Cord" meint Festigkeitsträger mit Multifilamentgarnen, welche den Prozess der Heißverstreckung incl. Imprägnierung bereits durchlaufen haben.

Es ist eine Verstärkungslage geschaffen, deren Corde aus Polyamid 6.6 bei einer Dehnung von 4% einen höhen E-Modul als vergleichbare Corde aufweisen, welche aber ermüdungsbeständiger in Bezug auf Druck- und Biegewechselbeanspruchungen sind. Diese Eigenschaften eignen sich insbesondere für den Einsatz dieser Verstärkungslage in einem Fahrzeugreifen, insbesondere als Gürtelbandage, da die erforderliche Dehnung bis ca. 3% für die Reifenherstellung weiterhin erhalten ist, während bei höheren Dehnungen höhere Kräfte aufgebracht werden müssen, welches für den Hochgeschwindigkeitsbetrieb des Reifens vorteilhaft ist.

Die nachfolgenden Vergleichswerte der feinheitsbezogenen Festigkeit eines Festigkeitsträgers aus Polyamid 6.6 der Konstruktion 1400x2 bei 4% Dehnung zeigen den Vorteil einer höheren feinheitsbezogenen Festigkeit des Festigkeitsträgers (B), der in einer erfindungsgemäßen Verstärkungslage eingesetzt ist im Vergleich zu einem Standard-Festigkeitsträger (A) in einer Verstärkungslage des Standes der Technik:

**Tab.1**

| | | |
|---|---|---|
| A | 1400x2 | 29 N = 1.0 cN/dtex |
| B | 1400x2 | 35 N = 1.3 cN/dtex |

Überraschenderweise werden die Corde aus Polyamid 6.6 für die erfindungsgemäße Verstärkungslage dadurch erhalten, dass das verwendete Rohgarn aus Polyamid 6.6 eine feinheitsbezogene Festigkeit aufweist, welche bei einer Dehnung von 4% in einem Bereich von 1,35 cN/dtex bis 1,60 cN/dtex liegt und dass dieses Rohgarn in einem Bereich größer als 5% und kleiner als 12% bei Temperaturen zwischen 230°C und 250°C verstreckt wird und auf geeignete Spulen mit einer Spannung zwischen 150g und 500g pro Festigkeitsträger aufgespult wird. Hierdurch bleiben die durch den Verstreckprozeß erzielten Eigenschaften auch bei dem auf die Spule aufgewickelten Festigkeitsträger erhalten, da dem Festigkeitsträger eine Relaxation nicht erlaubt ist und ohne die Relaxation, welche immer einen Modul-Verlust bedeutet, im Reifen eingesetzt werden können.

Die Kraft-Dehnungsdaten der Corde sind gemäß D885-16 bestimmt, nach der Konditionierung der Garne auf Spulen für 24 Stunden bei 24°C und einer relativen Luftfeuchtigkeit von 55%. Nach der Konditionierung sind die Corde innerhalb von 1 Minute getestet, nachdem sie von der Spule abgewickelt worden sind.

Diese Corde weisen eine feinheitsbezogene Festigkeit bei 4% Dehnung von 1,2 cN/dtex bis 2,0 cN/dtex und ein Heißschrumpf bei 177°C von 4% bis 7% auf. Die feinheitsbezogene Festigkeit bei 4% Dehnung von 1,2 cN/dtex bis 2,0 cN/dtex entspricht einem Modul von 30,6 g/dtex bis 51 g/dtex (34 g/d bis 56,7 g/d).

Die Modul-Werte sind folgendermaßen berechnet: feinheitsbezogene Festigkeit bei 4% Dehnung x 25, um die erforderliche feinheitsbezogene Festigkeit für 100% Dehnung zu erhalten.

Die feinheitsbezogene Festigkeit bei 4% Dehnung [cN/dtex] ist: Zugkraft bei 4% Dehnung [cN] / Feinheit [dtex], wobei die Feinheit des gesamten Festigkeitsträgers herangezogen ist.

Die Feinheit des gesamten Festigkeitsträgers errechnet sich aus der Summe der Feinheiten der Multifilamentgarne des Cordes. Beispiel: Ein Cord der Konstruktion 700dtex x 2 weist eine Feinheit des gesamten Festigkeitsträgers von 1400 dtex auf.

Der Heißschrumpf von Garnen bzw. Corden ist ermittelt mit einem Schrumpfmessgerät vom Hersteller Testrite unter einer Vorspannung von 0,045 g/dtex bei 177°C mit 2 Minuten Expositionszeit.

Zweckmäßig ist es, wenn das Rohgarn aus Polyamid 6.6 eine feinheitsbezogene Festigkeit aufweist, welche bei einer Dehnung von 4% in einem Bereich von 1,35cN/dtex bis 1,50 cN/dtex liegt. Würden die Kräfte noch höher sein, könnten diese zu Problemen beim Einformen führen.

Zweckmäßig ist es, wenn der Cord eine Feinheit von 300 bis 4000 dtex aufweist. Dieser Feinheitsbereich stellt einen vorteilhaften Kompromiss bezüglich Festigkeit einerseits und Rollwiderstand bzw. Kosten andererseits dar. Wäre die Feinheit zu gering, d.h. das Multifilamentgarn zu dünn, wäre eine zu geringe Festigkeit erhalten. Wäre das Multifilamentgarn zu dick, wäre dieses nachteilig für den Rollwiderstand des Reifens und nachteilig bezüglich der Kosten.

Vorteilhaft ist es, wenn der Twistfaktor α des Cordes in einem Bereich von 100 bis 250, vorzugsweise in einem Bereich von 120 bis 180 liegt, wobei α = Twist [t/m] · (Feinheit [tex]/ 1000)^{1/2}. Der Twistfaktor ist ein Maß für die Endverdrehung pro Meter des Cordes, bezogen auf die Feinheit des Cordes. Der Twistfaktor ist ein Maß für die Drehung pro Meter des Multifilamentgarens, bezogen auf die Feinheit des Multifilamentgarnes. Dieser Twistfaktor stellt einen vorteilhaften Kompromiss bezüglich Ermüdungsbeständigkeit und Festigkeit dar. Ein geringerer Twistfaktor wäre nachteilig in Bezug auf die Ermüdungbeständigkeit, ein höherer Twistfaktor würde eine geringere Festigkeit des Festigkeitsträgers bedeuten.

Zweckmäßig ist es, wenn der Cord die Konstruktion x2 oder x3 aufweist. Ein Cord aus 2 oder 3 Garnen weist eine bessere Ermüdungsbestündigkeit als ein verdrehtes Multifilamentgarn auf. Bei Konstruktionen höher als x3 nehmen die Twistkosten nachteilig stark zu, während andere Eigenschaften, wie beispielsweise die feinheitsbezogenen Festigkeit nachteilig abnehmen können.

In einer ersten besonders geeigneten Ausführung der Erfindung ist jeder Festigkeitsträger der Verstärkungslage ein Cord aus zwei miteinander verdrehten Multifilamentgarnen mit je einer Garnfeinheit von 1400 dtex. Der Cord weist somit die Konstruktion 1400x2 auf. Der Cord weist eine feinheitsbezogene Festigkeit auf, die bei einer Dehnung von 4% in einem Bereich von 1,3 cN/dtex bis 1,4 cN/dtex liegt. Die Corde sind vorzugsweise in einer Dichte von 90 epdm in der Verstärkungslage angeordnet. Durch den im Vergleich zum Stand der Technik erhöhten Modul des PA6.6-Cordes kann dieser in einer geringeren Dichte in der Verstärkungslage angeordnet sein, wodurch die Herstellung dieser Lage einfacher wird und ebenfalls ein Kostenvorteil aufgrund des verringerten Einsatzes an Festigkeitsträgern erreicht ist. Es besteht ebenfalls ein geringeres Risiko, dass das Halbzeug beim Schneiden in die benötigte Streifenbreite beschädigt wird.

In einer zweiten besonders geeigneten Ausführung der Erfindung ist jeder Festigkeitsträger der Verstärkungslage ein Cord aus zwei miteinander verdrehten Multifilamentgarnen mit je einer Garnfeinheit von 470 dtex. Der Cord weist somit die Konstruktion 470x2 auf. Der Cord weist eine feinheitsbezogene Festigkeit auf, die bei einer Dehnung von 4% in einem Bereich von 1,6 cN/dtex bis 1,7 cN/dtex liegt. Die Corde sind vorzugsweise in einer Dichte von 90 bis 100 epdm in der Verstärkungslage angeordnet. Durch den im Vergleich zum Stand der Technik erhöhten Modul des PA6.6-Cordes kann dieser in einer geringeren Dichte in der Verstärkungslage angeordnet sein, wodurch die Herstellung dieser Lage einfacher wird und ebenfalls ein Kostenvorteil aufgrund des verringerten Einsatzes an Festigkeitsträgern erreicht ist. Es besteht ebenfalls ein geringeres Risiko, dass das Halbzeug beim Schneiden in die benötigte Streifenbreite beschädigt wird.

In einer dritten besonders geeigneten Ausführung der Erfindung ist jeer Festigkeitsträger der Verstärkungslage ein Cord aus zwei miteinander verdrehten Multifilamentgarnen mit je einer Garnfeinheit von 350 dtex. Der Cord weist somit die Konstruktion 350x2 auf. Der Cord weist eine feinheitsbezogene Festigkeit auf, die bei einer Dehnung von 4% bei 1,9 cN/dtex liegt. Die Corde sind vorzugsweise in einer Dichte von 110 bis 130 epdm in der Verstärkungslage angeordnet sind. Durch den im Vergleich zum Stand der Technik erhöhten Modul des PA6.6-Cordes kann dieser in einer geringeren Dichte in der Verstärkungslage angeordnet sein, wodurch die Herstellung dieser Lage einfacher wird und ebenfalls ein Kostenvorteil aufgrund des verringerten Einsatzes an Festigkeitsträgern erreicht ist. Es besteht ebenfalls ein geringeres Risiko, dass das Halbzeug beim Schneiden in die benötigte Streifenbreite beschädigt wird.

Vorteilhaft ist es, wenn die Verstärkungslage eine Gürtelbandagenlage ist, wobei die Festigkeitsträger in Form von gummierten Gewebestreifen oder als gummiertem Gewebe gewickelt sind oder in Form von Einzel-Corden oder als gummierte Streifen, welche mehrere parallele Einzel-Corde aufweisen, spiralig gespult ist. Der Polyamid 6.6 -Cord ist aufgrund seiner physikalischen Eigenschaften besonders für den Einsatz in einer Gürtelbandage geeignet.

Die Verstärkunglage kann aber alternativ ebenfalls ein Wulstverstärker wie ein Chipper oder Flipper sein.

Die Erfindung wird in Bezug auf den Fahrzeugluftreifen gelöst, indem dieser eine vorbeschriebene gummierte Verstärkungslage aufweist. Der Fahrzeugluftreifen weist einen verbesserten Rollwiderstand auf. Bei einer höheren Festigkeitsträgerdichte in der Verstärkungslage weist der Fahrzeugluftreifen ebenfalls eine verbesserte Hochgeschwindigkeitsperformance auf.

Es wurden Reifentests mit einem PKW-Reifen der Dimension 225/45 R17 durchgeführt, wobei die Gürtelbandage aus 2 gespulten Verstärkungslagen besteht. Es wurden baugleiche PKW-Reifen für diese Tests herangezogen, lediglich die Gürtelbandage variiert. Die erfindungsgemäßen Verstärkungslagen weisen Festigkeitsträgern aus Polyamid 6.6 der Konstruktion 1400x2 auf, welche in einer Dichte von 90 epdm in der Verstärkungslage angeordnet sind. Als Vergleich wurden Verstärkungslagen des Standes der Technik getestet, welche Festigkeitsträger aus Standard-Polyamid 6.6 der Konstruktion 1400x2 in einer Dichte von 110 epdm aufweisen.

Die nachfolgende Tabelle 2 zeigt die Ergebnisse dieser Tests:

**Tab. 2**

| | Stand der Technik Verstärkungslage 1400x2, 110 epdm | Erfindung Verstärkungslage 1400x2, 90 epdm |
|---|---|---|
| Festigkeit bei 4% Dehnung | 319 N/cm | 315 N/cm |
| Rollwiderstand | 9.81 kg/t (=100%) | 9.68 kg/t (=101,3%) |

Es ist ersichtlich, dass die Festigkeit bei 4% Dehnung der erfindungsgemäßen Verstärkungslage trotz einer deutlich geringeren Dichte an Festigkeitsträgern etwa gleich hoch ist wie bei der Verstärkungslage des Standes der Technik. Ebenfalls ist ersichtlich, dass Vorteile hinsichtlich des Rollwiderstandes erzielt sind. Der Referenzreifen des Standes der Technik weist einen Rollwiderstand von 100% auf, während der Reifen mit der erfindungsgemäßen Verstärkungslage 101,3% erreicht hat. Höhere %-Werte stehen für einen besseren Rollwiderstand.

## Patentansprüche

1. Gummierte Verstärkungslage für Gegenstände aus elastomerem Material, vorzugsweise für Fahrzeugreifen, wobei die Verstärkungslage eine Vielzahl an parallelen und beabstandet zueinander angeordneten Festigkeitsträgern aufweist, wobei jeder Festigkeitsträger ein Cord ist, welcher aus wenigstens zwei verdrehten Multifilamentgarnen endverdreht ist,
**dadurch gekennzeichnet,**
**dass** der Cord aus wenigstens zwei verdrehten Multifilamentgarnen aus Polyamid 6.6 endverdreht ist,
**dass** das Rohgarn aus Polyamid 6.6 eine feinheitsbezogene Festigkeit aufweist, welche bei einer Dehnung von 4% in einem Bereich von 1,35cN/dtex bis 1,60 cN/dtex liegt,
**dass** der Cord eine feinheitsbezogene Festigkeit aufweist, welche bei einer Dehnung von 4% in einem Bereich von 1,2 cN/dtex bis 2 cN/dtex liegt und
**dass** der Cord einen Heißschrumpf bei 177° in einem Bereich von 4,0% - 7,0% aufweist,
wobei die feinheitsbezogene Festigkeit nach ASTM D885-16 und der Heißschrumpf bei 177°C unter einer Vorspannung von 0,045 g/dtex mit zwei Minuten Expositionszeit ermittelt sind.

2. Verstärkungslage nach Anspruch 1, **dadurch gekennzeichnet, dass** der Cord eine Feinheit von 300 bis 4000 dtex aufweist.

3. Verstärkungslage gemäß einem oder mehreren der vorangehenden Ansprüche,
**dadurch gekennzeichnet, dass** der Twistfaktor α eines jeden Multifilamentgarnes oder des Cordes in einem Bereich von 100 bis 250, vorzugsweise in einem Bereich von 120 bis 180 liegt, wobei α = Twist [t/m] · (Feinheit [tex]/ 1000)^{1/2}.

4. Verstärkungslage gemäß einem oder mehreren der vorangehenden Ansprüche,
**dadurch gekennzeichnet, dass** das Rohgarn aus Polyamid 6.6 eine feinheitsbezogene Festigkeit aufweist, welche bei einer Dehnung von 4% in einem Bereich von 1,35cN/dtex bis 1,50 cN/dtex liegt.

5. Verstärkungslage nach einem oder mehreren der vorangehenden Ansprüche 1 bis 4, **dadurch gekennzeichnet, dass** das Multifilamentgarn einen Heißschrumpf bei 177°C in einem Bereich von 5,0% - 6,5% aufweist.

6. Verstärkungslage nach einem oder mehreren der vorangehenden Ansprüche,
**dadurch gekennzeichnet, dass** der Cord die Konstruktion x2 oder x3 aufweist.

7. Verstärkungslage gemäß Anspruch 6, **dadurch gekennzeichnet, dass** der Festigkeitsträger ein Cord aus zwei miteinander verdrehten Multifilamentgarnen mit je einer Garnfeinheit von 1400 dtex ist und somit die Konstruktion 1400x2 aufweist, dass der Cord eine feinheitsbezogene Festigkeit aufweist, die bei einer Dehnung von 4% in einem Bereich von 1,3 cN/dtex bis 1,4 cN/dtex liegt und dass die Corde vorzugsweise in einer Dichte von 80-120 epdm, besonders bevorzugt in einer Dichte von 90 epdm in der Verstärkungslage angeordnet sind.

8. Verstärkungslage gemäß Anspruch 6, **dadurch gekennzeichnet, dass** der Festigkeitsträger ein Cord aus zwei miteinander verdrehten Multifilamentgarnen mit je einer Garnfeinheit von 470 dtex ist und somit die Konstruktion 470x2 aufweist, dass der Cord eine feinheitsbezogene Festigkeit aufweist, die bei einer Dehnung von 4% in einem Bereich von 1,6 cN/dtex bis 1,7 cN/dtex liegt und dass die Corde vorzugsweise in einer Dichte von 90 bis 170, besonders bevorzugt in einer Dichte von etwa 100 epdm in der Verstärkungslage angeordnet sind.

9. Verstärkungslage gemäß Anspruch 6, **dadurch gekennzeichnet, dass** der Festigkeitsträger ein Cord aus zwei miteinander verdrehten Multifilamentgarnen mit je einer Garnfeinheit von 350 dtex ist und somit die Konstruktion 350x2 aufweist, dass der Cord eine feinheitsbezogene Festigkeit aufweist, die bei einer Dehnung von 4% bei 1,9 cN/dtex liegt und dass die Corde vorzugsweise in einer Dichte von 110 bis 200 epdm, besonders bevorzugt in einer Dichte von 110 bis 130 epdm in der Verstärkungslage angeordnet sind.

10. Verstärkungslage nach einem der vorangehenden Ansprüche, **dadurch gekennzeichnet, dass** diese eine Gürtelbandagenlage ist, wobei die Festigkeitsträger in Form von gummierten Gewebestreifen oder als gummiertem Gewebe gewickelt sind oder in Form von Einzel-Corden oder als gummierte Streifen, welche mehrere parallele Einzel-Corde aufweisen, spiralig gespult ist.

11. Verstärkungslage nach einem der vorangehenden Ansprüche 1 bis 9, **dadurch gekennzeichnet, dass** diese ein Wulstverstärker wie ein Chipper oder Flipper ist.

12. Fahrzeugluftreifen, welcher eine Verstärkungslage nach einem der vorangehenden Ansprüche aufweist.

## Claims

1. Rubberized reinforcing ply for articles composed of elastomeric material, preferably for vehicle tires, wherein the reinforcing ply has a multiplicity of strengthening elements which are in parallel and spaced apart, wherein each strengthening element is a cord which is end-twisted from at least two twisted multifilament yarns,
**characterized in that**
the cord is end-twisted from at least two twisted multifilament yarns composed of polyamide 6.6,
**in that** the raw yarn composed of polyamide 6.6 has a tenacity which, at an elongation of 4%, is within a range from 1.35 cN/dtex to 1.60 cN/dtex,
**in that** the cord has a tenacity which, at an elongation of 4%, is within a range from 1.2 cN/dtex to 2 cN/dtex and
**in that** the cord has a thermal shrinkage at 177° within a range of 4.0% - 7.0%,
wherein the tenacity in accordance with ASTM D885-16 and the thermal shrinkage at 177°C are determined under a pre-tension of 0.045 g/dtex with an exposure time of two minutes.

2. Reinforcing ply according to Claim 1, **characterized in that** the cord has a linear density of from 300 to 4000 dtex.

3. Reinforcing ply according to one or more of the preceding claims, **characterized in that** the twist factor α of each multifilament yarn or of the cord is within a range from 100 to 250, preferably within a range from 120 to 180, where α = twist [t/m] · (linear density [tex]/ 1000)^{1/2}.

4. Reinforcing ply according to one or more of the preceding claims, **characterized in that** the raw yarn composed of polyamide 6.6 has a tenacity which, at an elongation of 4%, is within a range from 1.35cN/dtex to 1.50 cN/dtex.

5. Reinforcing ply according to one or more of the preceding Claims 1 to 4, **characterized in that** the multifilament yarn has a thermal shrinkage at 177°C within a range of 5.0% - 6.5%.

6. Reinforcing ply according to one or more of the preceding claims, **characterized in that** the cord has a x2 or x3 construction.

7. Reinforcing ply according to Claim 6, **characterized in that** the strengthening element is a cord composed of two multifilament yarns twisted with one another and each having a linear yarn density of 1400 dtex, and therefore has a 1400x2 construction, **in that** the cord has a tenacity which, at an elongation of 4%, is within a range from 1.3 cN/dtex to 1.4 cN/dtex, and **in that** the cords are arranged in the reinforcing ply preferably in a density of 80-120 epdm, more preferably in a density of 90 epdm.

8. Reinforcing ply according to Claim 6, **characterized in that** the strengthening element is a cord composed of two multifilament yarns twisted with one another and each having a linear yarn density of 470 dtex, and therefore has a 470x2 construction, **in that** the cord has a tenacity which, at an elongation of 4%, is within a range from 1.6 cN/dtex to 1.7 cN/dtex, and **in that** the cords are arranged in the reinforcing ply preferably in a density of from 90-170 epdm, more preferably in a density of about 100 epdm.

9. Reinforcing ply according to Claim 6, **characterized in that** the strengthening element is a cord composed of two multifilament yarns twisted with one another and each having a linear yarn density of 350 dtex, and therefore has a 350x2 construction, **in that** the cord has a tenacity which, at an elongation of 4%, is 1.9 cN/dtex, and **in that** the cords are arranged in the reinforcing ply preferably in a density of 110 to 200 epdm, more preferably in a density of 110 to 130 epdm.

10. Reinforcing ply according to any of the preceding claims, **characterized in that** it is a belt bandage ply, wherein the strengthening elements are wound in the form of rubberized fabric strips or as rubberized fabric or is spirally coiled in the form of individual cords or as rubberized strips which have a plurality of parallel individual cords.

11. Reinforcing ply according to any of the preceding Claims 1 to 9, **characterized in that** it is a bead reinforcement such as a chipper or flipper.

12. Pneumatic vehicle tire which has a reinforcing ply according to any of the preceding claims.

## Revendications

1. Couche de renforcement caoutchoutée pour articles en matériau élastomère, de préférence pour pneus de véhicules, la couche de renforcement comprenant une pluralité de renforts parallèles et agencés espacés les uns des autres, chaque renfort étant un câble qui est vrillé aux extrémités à partir d'au moins deux fils multifilamentaires vrillés,
**caractérisé en ce que**
le câble est vrillé aux extrémités à partir d'au moins deux fils multifilamentaires vrillés en polyamide 6.6, le fil brut en polyamide 6.6 présente une résistance relative au titre qui se situe à un allongement de 4 % dans une plage allant de 1,35 cN/dtex à 1,60 cN/dtex,
le câble présente une résistance relative au titre qui se situe à un allongement de 4 % dans une plage allant de 1,2 cN/dtex à 2 cN/dtex, et
le câble présente un retrait à la chaleur à 177 °C dans une plage allant de 4,0 % à 7,0 %,
la résistance relative au titre étant déterminée selon ASTM D885-16 et le retrait à la chaleur à 177 °C étant déterminé sous une tension initiale de 0,045 g/dtex avec un temps d'exposition de deux minutes.

2. Couche de renforcement selon la revendication 1,
**caractérisée en ce que** le câble présente un titre de 300 à 4 000 dtex.

3. Couche de renforcement selon une ou plusieurs des revendications précédentes, **caractérisée en ce que** le coefficient de torsion α d'un fil multifilamentaire ou du câble se situe dans une plage allant de 100 à 250, de préférence dans une plage allant de 120 à 180, avec α = torsion [t/m] · (titre [tex]/1000)^{1/2}.

4. Couche de renforcement selon une ou plusieurs des revendications précédentes, **caractérisée en ce que** le fil brut en polyamide 6.6 présente une résistance relative au titre qui se situe à un allongement de 4 % dans une plage allant de 1,35 cN/dtex à 1,50 cN/dtex.

5. Couche de renforcement selon une ou plusieurs des revendications 1 à 4 précédentes, **caractérisée en ce que** le fil multifilamentaire présente un retrait à la chaleur à 177 °C dans une plage allant de 5,0 % à 6,5 %.

6. Couche de renforcement selon une ou plusieurs des revendications précédentes, **caractérisée en ce que** le câble présente la construction x2 ou x3.

7. Couche de renforcement selon la revendication 6,
**caractérisée en ce que** le renfort est un câble constitué par deux fils multifilamentaires vrillés l'un avec l'autre, ayant chacun un titre de fil de 1 400 dtex, et présente par conséquent la construction 1 400 x 2, **en ce que** le câble présente une résistance relative au titre qui se situe à un allongement de 4 % dans une plage allant de 1,3 cN/dtex à 1,4 cN/dtex, et **en ce que** les câbles sont agencés dans la couche de renforcement de préférence en une densité de 80 à 120 epdm, de manière particulièrement préférée en une densité de 90 epdm.

8. Couche de renforcement selon la revendication 6,
**caractérisée en ce que** le renfort est un câble constitué par deux fils multifilamentaires vrillés l'un avec l'autre, ayant chacun un titre de fil de 470 dtex, et présente par conséquent la construction 470 x 2, **en ce que** le câble présente une résistance relative au titre qui se situe à un allongement de 4 % dans une plage allant de 1,6 cN/dtex à 1,7 cN/dtex, et **en ce que** les câbles sont agencés dans la couche de renforcement de préférence en une densité de 90 à 170 epdm, de manière particulièrement préférée en une densité d'environ 100 epdm.

9. Couche de renforcement selon la revendication 6,
**caractérisée en ce que** le renfort est un câble constitué par deux fils multifilamentaires vrillés l'un avec l'autre, ayant chacun un titre de fil de 350 dtex, et présente par conséquent la construction 350 x 2, **en ce que** le câble présente une résistance relative au titre qui se situe à un allongement de 4 % à 1,9 cN/dtex, et **en ce que** les câbles sont agencés dans la couche de renforcement de préférence en une densité de 110 à 200 epdm, de manière particulièrement préférée en une densité de 110 à 130 epdm.

10. Couche de renforcement selon l'une quelconque des revendications précédentes, **caractérisée en ce que** celle-ci est une couche de bandage de ceinture, les renforts étant enroulés sous la forme de bandes de tissu caoutchoutées ou sous la forme d'un tissu caoutchouté, ou étant embobinés en spirale sous la forme de câbles individuels ou sous la forme de bandes caoutchoutées, qui comprennent plusieurs câbles individuels parallèles.

11. Couche de renforcement selon l'une quelconque des revendications 1 à 9 précédentes, **caractérisée en ce que** celle-ci est un renfort de talon, tel qu'un chipper ou un flipper.

12. Pneu de véhicule, qui comprend une couche de renforcement selon l'une quelconque des revendications précédentes.
